# EUROPÄISCHE PATENTSCHRIFT

(11) **EP 0 433 666 B1**
(45) Veröffentlichungstag und Bekanntmachung des Hinweises auf die Patenterteilung: **04.10.1995**
(21) Anmeldenummer: 90121925.3
(22) Anmeldetag: 16.11.1990
(51) Int. Cl.: G01N 21/90

(54) **Vorrichtung zur dreidimensionalen Inspektion von Hohlkörpern**
Three-dimensional inspection apparatus for hollow bodies
Appareil d'inspection tridimensionnelle de corps creux

(30) Priorität: 19.12.1989 CH 4560/89; 15.06.1990 CH 2006/90
(43) Veröffentlichungstag der Anmeldung: 26.06.1991
(73) Patentinhaber: ELPATRONIC AG, CH-6303 Zug (CH)
(72) Erfinder: Apter, Robert, CH-8600 Dübendorf (CH); Pau, Louis-Français, F-13600 Ceyreste (FR); Agerskov, Carsten, DK-2860 Soborg (DK); Jacobi, Ulrik, DK-2900 Hellerup (DK); Sloth Henrik, Dk-2720 Vanlose (DK)

(56) Entgegenhaltungen:
- EP-A- 0 151 059
- EP-A- 0 258 810
- EP-A- 0 415 154
- DE-A- 3 035 077
- GB-A- 2 165 942

## Beschreibung

Die Erfindung betrifft eine Vorrichtung der im Obergriff des Patentanspruchs 1 angegebenen Art.

Diese Vorrichtung ist aus der EP-B1-0 151 059 bekannt und dient zur Inspektion der Gesamtheit der Oberfläche von lichtdurchlässigen Hohlkörpern. Als Förderer hat diese bekannte Vorrichtung ein kontinuierlich bewegtes Transport-Sternrad, dem ein äußeres Organ zum Drehen der Hohlkörper um deren Symmetrieachse zugeordnet ist. Die Beleuchtungseinrichtung besteht aus einer Laserlichtquelle, die einen Laserstrahl über einen Drehspiegel mit horizontaler Achse auf eine Gruppe von vier festen, ebenen Spiegeln richtet, welche in einer vertikalen Reihe übereinander angeordnet sind. Die ebenen Spiegel liefern auf Grund der Drehung des Drehspiegels einen schwingenden Lichtstrahl, der über einen Schwingspiegel auf den Hohlkörper geworfen wird. Der Schwingspiegel begleitet durch seine Schwingbewegung den vor ihm in Drehung befindlichen Hohlkörper während einer vollständigen Umdrehung und bestreicht dabei mit dem Lichtstrahl den Hohlkörper in aufeinanderfolgenden Diametralebenen. Der Photodetektor ist ein Empfänger mit einem lichtempfindlichen Schirm, der vom durchscheinenden Licht beleuchttet wird. Bei dieser bekannten Vorrichtung dient als Organ zum Drehen der Gegenstände ein Treibriemen, der auf der dem lichtempfindlichen Schirm zugewandten Seite der Hohlkörper an deren Seitenwand in einer Zwischenhöhe anliegt und dadurch den Hohlkörper in diesem Bereich abschattet. Damit auch dieser im toten Winkel gelegene Bereich inspiziert werden kann, ist die vertikale Reihe fester Spiegel vorgesehen, welche unter verschiedenen Neigungswinkeln konvergierende Lichtstrahlen liefern, so daß unter Umgehung des Treibriemens die Gesamtheit der Oberfläche des Hohlkörpers im durchscheinenden Licht inspiziert werden kann.

Nachteilig ist bei dieser bekannten Vorrichtung, daß sie bewegte Spiegel, nämlich einen Dreh- und einen Schwingspiegel benötigt, deren Bewegung genau auf einander und auf die Bewegung des Sternrads abgestimmt sein und abgestimmt bleiben muß. Besonders schwierig wird das, wenn als Photodetektor eine Zeilenkamera oder dergleichen benutzt wird, deren Prozessor die einzelnen Zeilen zeitgerecht zu einem Gesamtbild des zu inspizierenden Hohlkörpers zusammensetzen muß. Weiter ist problematisch, daß bewegte Spiegel wie der Schwingspiegel, der bei dieser bekannten Vorrichtung durch einen mechanischen Nocken in der Bewegungsrichtung des Förderers über den Inspektionsbereich mitgenommen und dann schnell zurückgestellt wird, Verschleiß unterliegen und zumindest eine ständige Nachjustierung erfordern. Auf den Schwingspiegel kann bei dieser bekannten Vorrichtung aber nicht verzichtet werden, weil sonst keine ausreichende Inspektionszeit verfügbar wäre. Über die Art der Auswertung der von dem lichtempfindlichen Schirm dieser bekannten Vorrichtung gelieferten Bilder finden sich in der EP-B1-0 151 059 keine Angaben.

Aus der EP-A2-0 293 510 ist eine weitere Vorrichtung bekannt, die zum Inspizieren der Seitenwände von Flaschen vorgesehen ist. Bei dieser bekannten Vorrichtung wird ebenfalls von einem Schwingspiegel und sogar von einem Schwingobjektiv Gebrauch gemacht, um die zu inspizierende Flasche vom Anfang bis zum Ende des Inspektionsbereiches zu verfolgen. Diese bekannte Vorrichtung weist daher die gleichen Nachteile wie die oben erstgenannte bekannte Vorrichtung auf. Bei Verwendung eines Schwingobjektivs statt eines Schwingspiegels dürften die Probleme überdies noch größer werden, weil die Optik extrem genau bewegt werden muss, wenn überhaupt verwertbare Bilder erzielt werden sollen.

Aus der DE-A-30 35 077 ist eine weitere Vorrichtung bekannt, die dazu dient, einen Behälter bei raumfester Zuordnung eines einzigen optoelektronischen Empfängers zu dem Behälter zu erfassen. Zu diesem Zweck besitzt diese Vorrichtung einen Inspektionsbereich, eine Beleuchtungseinrichtung, eine Fernsehkamera oder Fotodiodenmatrix und zwei feste, ebene Spiegel, die im Strahlengang zwischen dem Inspektionsbereich und der Kamera angeordnet und untereinander abgewinkelt sind. In dieser Vorrichtung ist der Inspektionsbereich etwa auf die Breite eines Behälters begrenzt, so daß die Inspektion eines Behälters praktisch nur in einer bestimmten Position des Behälters durchgeführt werden kann. Das heißt, der Behälter muß raumfest zum Detektor stehen, weshalb bei der Inspektion mit einer Blitzlampe gearbeitet wird. Diese Art der Inspektion ist nur bei transparenten Behältern möglich, da mit Durchlicht gearbeitet werden muß. Bei der Inspektion wird die Flasche über ihrer gesamten Höhe quasi mit einer Momentaufnahme aufgenommen, und zwar einmal durch einen rechten und einmal durch einen linken Spiegel.

Aufgabe der Erfindung ist es, eine Vorrichtung der eingangs genannten Art so auszubilden, daß keine bewegten Spiegel erforderlich sind.

Diese Aufgabe ist durch die im Anspruch 1 angegebenen Merkmale gelöst. Die weiteren Ansprüche betreffen vorteilhafte Ausführungsformen.

Die Vorrichtung zur Lösung der Aufgabe besitzt eine Beleuchtungseinrichtung, die Hohlkörper innerhalb des Inspektionsbereiches homogen beleuchtet. Ihr photoelektrischer Wandler ist Teil einer Matrix- oder Zeilenkamera mit einem zugeordneten Prozessor und Monitor zur Bildverarbeitung. Ferner besitzt sie eine Gruppe von n festen, ebenen Spiegeln, die zwischen dem Inspektionsbereich und der Matrix- oder Zeilenkamera in einer quer zur Achse der Kreisbahn gelegenen horizontalen Reihe versetzt hintereinander angeordnet sind. Diese Spiegel haben bei gegebener Winkelbreite des Inspektionsbereiches eine gegenseitige Abwinkelung von 1/n der Winkelbreite des Inspektionsbereiches, so daß sie den gesamten Inspektionsbereich gleichzeitig erfassen und das aus n aneinander anschliessenden Abschnitten des Inspektionsbereichs austretende Licht über je einen der n Spiegel so versetzt auf den photoelektrischen Wandler lenken, daß dieser jeweils gleichzeitig n Teilbilder - je eines aus jedem Abschnitt - in einer Reihe empfängt.

Bei der Lösung sind die einzigen bewegten Teile der Vorrichtung der Förderer und die durch diesen auf einer Kreisbahn bewegten und dabei um ihre Symmetrieachse gedrehten Hohlkörper. Bei diesen handelt es sich bei der Vorrichtung nach Anspruch 2, bei der als Beleuchtungseinrichtung eine Durchlichtquelle verwendet wird, vorzugsweise um durchsichtige Flaschen mit Verschlußgewinde, das zur Ermittlung von Defekten inspiziert werden soll. Bei der Vorrichtung nach Anspruch 3, bei der als Beleuchtungseinrichtung eine Auflichtquelle verwendet wird, handelt es sich vorzugsweise um lichtundurchlässige oder undurchsichtige Hohlkörper (z.B. Blechdosen).

Die homogene Beleuchtung der Hohlkörper innerhalb des Inspektionsbereiches kann beispielsweise nach Anspruch 4 dadurch erreicht werden, daß man, ausgehend von einer Punktlichtquelle, über eine Zerstreuungslinse und eine Schlitzblende einen trichterförmigen Lichtstrahl herstellt. Man kann aber nach Anspruch 5 auch eine Beleuchtungseinrichtung verwenden, die verteilte Lichtquellen und eine diffus transparente Platte enthält.

Nach Anspruch 6 wird (bei n festen Spiegeln in der Vorrichtung) das Verhältnis der Hohlkörperdrehgeschwindigkeit (Winkelgeschwindigkeit mit der sich die Hohlkörper drehen) zur Förderdrehgeschwindigkeit (Winkelgeschwindigkeit, mit der sich der Förderer dreht) so gewählt, daß jeder Hohlkörper innerhalb des Inspektionsbereiches eine vollständige Umdrehung um seine Symmetrieachse und 1/n Umdrehung vor jedem Spiegel ausführt. Dabei beträgt, wie Anspruch 7 aussagt, der gegenseitige Winkelabstand zwischen zwei auf dem Förderer transportierten Hohlkörpern 2/n derjenigen auf die Kreisbahn bezogenen Winkelbreite, die der Förderer innerhalb des Inspektionsbereiches durchläuft. Beispielsweise können sich nach Anspruch 8 die Hohlkörperdrehung um die Symmetrieachse und die Drehbewegung des Förderers gegenseitig addieren.

Die festen Spiegel können nach Anspruch 9 höhenversetzt hintereinander so angeordnet und gegen die Vertikale und untereinander abgewinkelt sein, daß mit jedem Spiegel nacheinander ein in der Vertikalen gleicher Bereich des Hohlkörpers auf dem photoelektrischen Wandler abbildbar ist und die auf der Kreisbahn hintereinander angeordneten Bereiche mit Hilfe der Spiegel und dem bildverarbeitenden Prozessor (gegebenenfalls nach vorübergehender Speicherung) auf dem Monitor in einer nebeneinanderliegenden Reihe abgebildet werden. Die Winkelstellung aller Spiegel ist nach Anspruch 10 justierbar, und nach Anspruch 11 kann im Lichtstrahlengang zwischen der Gruppe von festen Spiegeln und dem photoelektrischen Wandler ein Umlenkspiegel angeordnet sein.

Ausführungsbeispiele der Erfindung werden im folgenden unter Bezugnahme auf die Zeichnungen näher beschrieben. Es zeigt
- Fig. 1: eine perspektivische Gesamtansicht einer Flaschenprüfmaschine, welche mit einer ersten Ausführungsform einer Inspektionsvorrichtung versehen ist,
- Fig. 2: die Inspektionsebene der Flaschenprüfmaschine nach Fig 1 in Draufsicht,
- Fig. 3: als Einzelheit in perspektivischer Darstellung die Inspektionsvorrichtung nach Fig. 1,
- Fig. 4: als Einzelheit in Draufsicht die Inspektionsvorrichtung nach Fig. 1,
- Fig. 5: eine Ansicht einer Kamera mit zugeordneten Spiegeln in Richtung eines Pfeils V in Fig. 4, und
- Fig. 6: in einer Ansicht wie in Fig. 3 eine zweite Ausführungsform der Inspektionsvorrichtung.

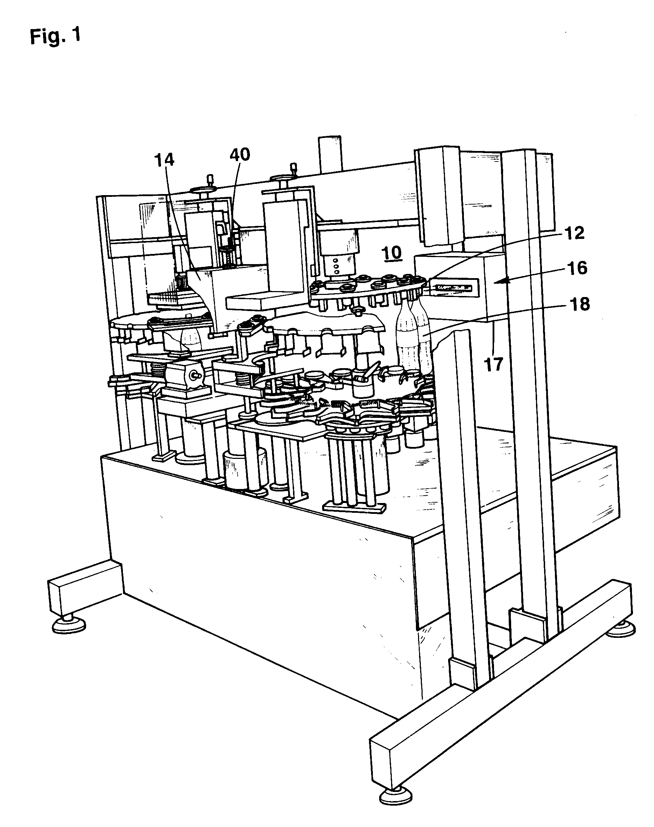

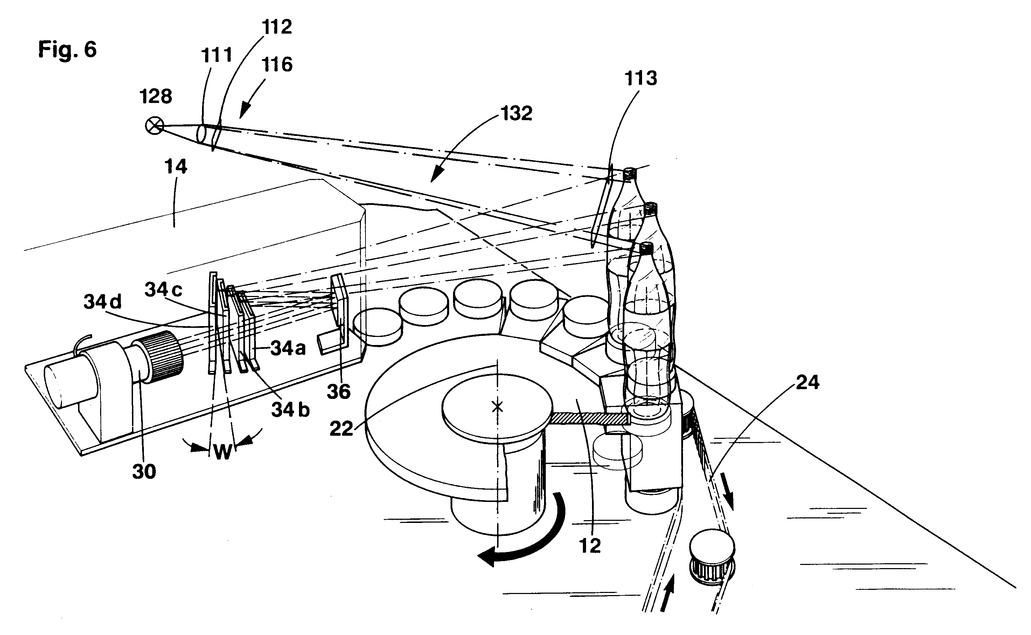

Im folgenden wird die Inspektion von Hohlkörpern 18 in Form von durchsichtigen Flaschen (Fig. 1 bis 5) und von weniger durchsichtigen oder undurchsichtigen Flaschen (Fig. 6) und unter Verwendung einer Gruppe von vier Spiegeln beschrieben, wobei die Vorrichtung zum Inspizieren des mit Gewinde versehenen Mündungsbereiches der Flaschen benutzt werden soll. Die Vorrichtung könnte statt dessen auch zum Inspizieren von anderen Bereichen von Flaschen oder anderen mehr oder weniger durchsichtigen Körpern aller Art wie Hohlgläsern, Hohlkörpern aus PET, Blechdosen usw. benutzt werden.

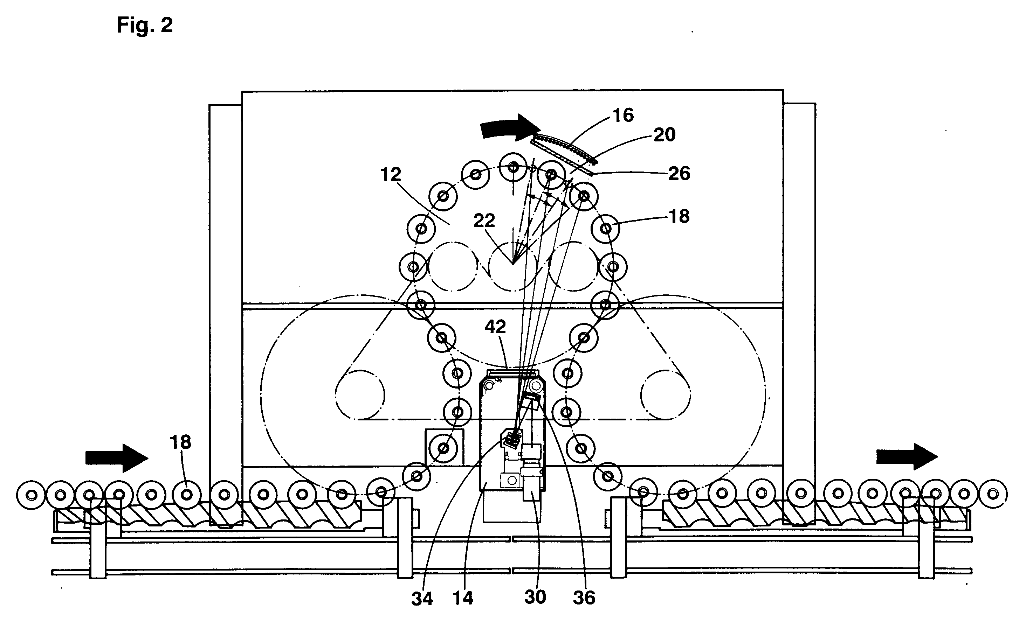

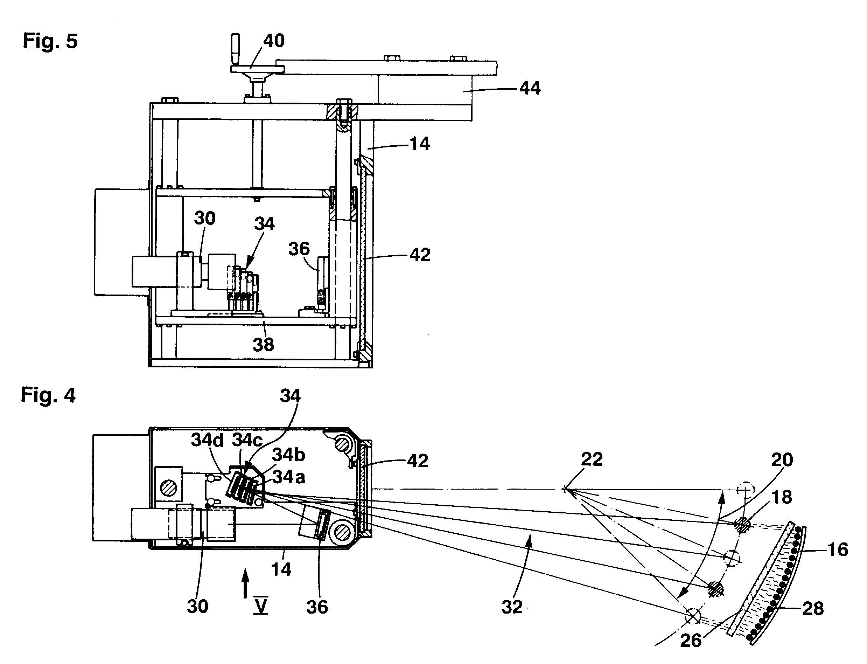

Fig. 1 zeigt eine Gesamtansicht einer Flaschenprüfmaschine, die eine insgesamt mit 10 bezeichnete Inspektionsvorrichtung für den mit Gewinde versehenen Flaschenmündungsbereich aufweist. Hinter den beiden in Fig. 1 vorn dargestellten Drehtischen ist ein dritter Drehtisch vorgesehen, welcher der Inspektionsvorrichtung 10 als Förderer 12 zugeordnet ist. Die Inspektionsvorrichtung 10 besteht aus einer Inspektionseinheit 14 und einer Beleuchtungseinrichtung 16 mit einem Gehäuse 17 (das in den Fig. 2 und 4 der Übersichtlichkeit halber weggelassen worden ist).

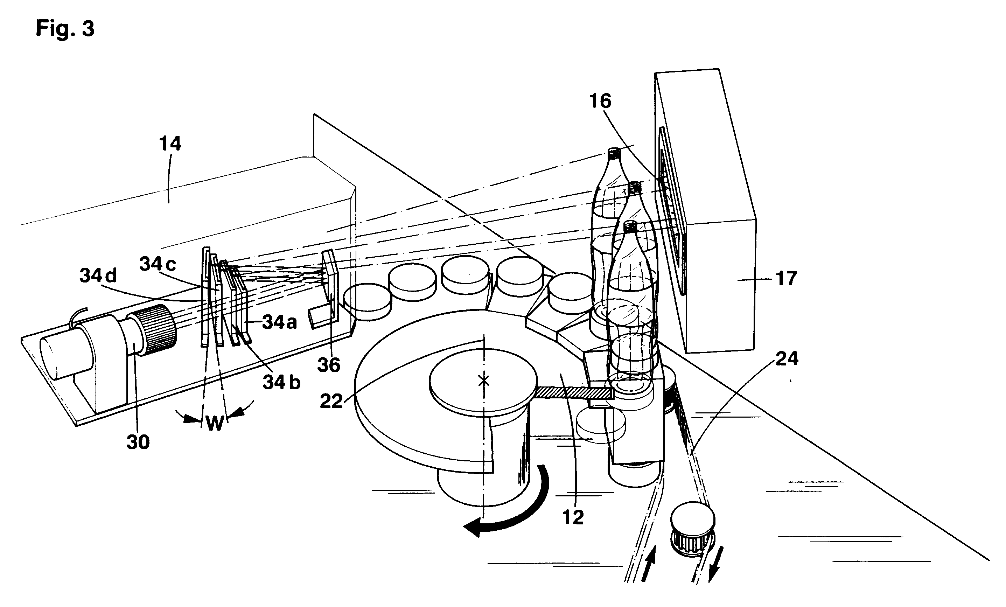

Gemäß Fig. 2 werden zu inspizierende Flaschen 18 mittels einer Schneckenspindel dem links dargestellten vorderen Drehtisch zugeführt, der die Flaschen 18 an den als Karussel ausgebildeten dritten Drehtisch oder Förderer 12 abgibt, welcher seinerseits die Flaschen 18 nach der Inspektion an den rechts dargestellten vorderern Drehtisch abgibt, welchem sie durch eine weitere Schneckenspindel entnommen werden. Die Transportrichtung ist in Fig. 2 jeweils durch schwarze Pfeile angegeben. Der Förderer 12 bewegt die Flaschen 18 auf einer Kreisbahn durch einen Inspektionsbereich 20. Dabei werden die Flaschen 18 um ihre Symmetrieachse, d.h. um ihre Längsachse gedreht, die zur Achse 22 der Kreisbahn, d.h. zur Mittelachse des Förderers 12 parallel ist. Zum Drehen der Flaschen 18 um deren Längsachse dient ein Treibriemen 24, der nur in Fig. 3 dargestellt ist.

Die Beleuchtungseinrichtung 16, die außerhalb der Kreisbahn auf der von der Inspektionseinheit 14 abgewandten Seite derselben angeordnet ist, besteht in dem in den Fig. 1 bis 5 dargestellten Ausführungsbeispiel aus dem Gehäuse 17, welches an der Vorderseite einen Schlitz aufweist, der mit einer Platte 26 aus hitzebeständigem Glas bedeckt ist. Die Platte 26 ist sandgestrahlt, also diffus transparent, und empfängt Licht aus einer verteilten Lichtquelle 28. Die Beleuchtungseinrichtung 16 bewirkt so eine homogene Beleuchtung der Flaschen 18 in dem gesamten Inspektionsbereich 20.

Gemäß der Darstellung in den Fig. 2 bis 5 enthält die Inspektionseinheit 14 eine Zeilenkamera 30 und eine Gruppe 34 von in dem Lichtstrahlengang 32 zwischen dem Inspektionsbereich 20 und einem nicht dargestellten photoelektrischen Wandler der Zeilenkamera angeordneten festen, ebenen Spiegeln 34a-34d, die in einer quer zur Achse 22 der Kreisbahn gelegenen horizontalen Reihe angeordnet und gegeneinander seitlich versetzt sind, d.h. in der Horizontalebene einen Winkel W (Fig. 3) miteinander bilden. Der nicht dargestellte photoelektrische Wandler der Zeilenkamera ist beispielsweise ein linearer CCD-Detektor. Zwischen der Gruppe 34 von Spiegeln und der Zeilenkamera 30 ist ein Umlenkspiegel 36 in der Inspektionseinheit 14 vorgesehen. Die Zeilenkamera 30, der Umlenkspiegel 36 und die Gruppe 34 von Spiegeln sind gemeinsam auf einer Platte 38 befestigt, die auf in Fig. 5 ersichtliche Weise mittels eines Handrads 40 höhenverstellbar ist. Die Inspektionseinheit 14 hat auf der Eintrittsseite des Lichtstrahlenganges 32 ein Fenster mit einer Einlaßscheibe 42, dessen Höhe auf den Höhenverstellbereich der Platte 38 abgestimmt ist. Mittels einer Konsole 44 ist die Inspektionseinheit 14 am Gestell der Flaschenprüfmaschine befestigt.

Aus der Darstellung in den Fig. 3 und 5 ist weiter zu erkennen, daß die Spiegel 34a-34d höhenversetzt hintereinander angeordnet sind. Außerdem sind die Spiegel 34a-34d gegen die Vertikale so abgewinkelt, daß mit jedem Spiegel ein in der Vertikalen gleicher Bereich der Flasche 18 zum Inspizieren auf dem photoelektrischen Wandler abgebildet wird. Die auf der Kreisbahn nacheinander inspizierten Gewindebereiche der Flaschen 18 werden so durch die Spiegel 34a-34d auf der Zeilenkamera 30 in Zeilen übereinander abgebildet, wie es in der Darstellung in den Fig. 2 bis 4 zu erkennen ist. Die Spiegel 34a bis 34d sind auf nicht im einzelnen dargestellte Weise justierbar, so daß jeweils ihr Winkel gegen die Vertikale und ihr gegenseiter Winkel W einstellbar und justierbar sind.

Die vier Lichtstrahlen des Lichtstrahlenganges 32, die von den Flaschen 18 im Inspektionsbereich zu den vier Spiegeln 34a bis 34d und von diesen aus zu der Zeilenkamera 30 gehen, sind, nachdem die Justierung einmal vorgenommen worden ist, fest. In einem Zeitpunkt t₁ sind zwei Flaschen 18 in den in Fig. 4 schraffierten Positionen und werden daher vom Spiegel 34a und vom Spiegel 34c gesehen. Die Spiegel 34b und 34d sehen in dem Zeitpunkt t₁ keine Flaschen 18, weil diesen in diesem Zeitpunkt keine Flaschen 18 gegenüberliegen. In einem Zeitpunkt t₂ sind die Flaschen 18 weitergewandert, und nun sehen die Spiegel 34b und 34d jeweils eine Flasche 18, und die Spiegel 34a und 34c sehen keine Flasche 18. Es sehen also immer die Spiegel 34a, 34c oder 34b, 34d eine Flasche 18, da zwei Spiegel auf die Teilungsmitte gerichtet sind (schraffierte Positionen) und zwei Spiegel auf die Teilungspositionen (unschraffierte Positionen). Weil sich jede Flasche 18 bei ihrer Translationsbewegung auf der Kreisbahn gleichzeitig um ihre Längsachse dreht und innerhalb des Inspektionsbereiches 20 eine vollständige Umdrehung um ihre Längsachse ausführt, nimmt jeder Spiegel 34a-34d ein Viertel des Umfangs der Flasche 18 in deren Gewindebereich auf. Zwei Viertel zweier verschiedener Flaschen werden jeweils gleichzeitig aufgenommen, da zwei Spiegel zwei Flaschen 18 zur Zeit t₁ und die beiden anderen Spiegel zwei Flaschen 18 zur Zeit t₂ sehen.

Der Zeilenkamera 30 ist ein nicht dargestellter Prozessor zugeordnet, bei dem es sich um einen Einzelbildspeicher mit zugeordneter Zeilenabtastschnittstelle handelt, so daß die Zeilendetektorbilder, welche der Photodetektor liefert, Zeile für Zeile zusammengesetzt werden können, um eine Abwicklung des dreidimensionalen Gewindebildes in zwei Dimensionen zu erzeugen. Eine digitale Speichervorrichtung sorgt dafür, daß die Detektorausgangssignale jeder Zeit aufgezeichnet und dann in der richtigen Lage und gegenseitigen Beziehung dargestellt werden. Ein der Zeilenkamera 30 nachgeschalteter Monitor zeigt dann die vier Bilder übereinander an, wobei die Anzeigezeile aus vier Teilen besteht, die von den vier Spiegeln nacheinander aufgenommen worden sind. Das vom ersten Spiegel 34a aufgenommene Bild bildet dabei das unterste Viertel der Zeile, und die übrigen Bildviertel sind darüber angeordnet, wie es aus Fig. 3 ersichtlich ist.

Das vorstehend beschriebene Ausführungsbeispiel bezieht sich auf n = 4 Spiegel. Damit ein Gesamtumfangsbild jeder sich durch den Inspektionsbereich 20 bewegenden Flasche aufgenommen werden kann, muß das Verhältnis der Geschwindigkeit der Drehung der Flasche um ihre eigene Längsachse zu der Geschwindigkeit des Förderers 12 so gewählt werden, daß jede Flasche im Inspektionsbereich 20 vor jedem Spiegel 1/n Umdrehung ausführt.

Die Richtungen der Flaschendrehung um die Flaschenlängsachse und der Bewegung des Förderers 12 werden beispielsweise so gewählt, daß sich die Flaschendrehgeschwindigkeit und die Fördererdrehwindigkeit im Inspektionsbereich 20 addieren. Wenn sich also zum Beispiel gemäß der Darstellung in Fig. 3 der Förderer 12 im Uhrzeigersinn dreht, müssen die Flaschen 18 im Inspektionsbereich durch den Treibriemen 24 (dessen Bewegungsrichtung durch Pfeile angegeben ist) so in Drehung versetzt werden, daß sie sich im Gegenuhrzeigersinn um ihre Längsachse drehen. Von der Spiegelgruppe 34 aus gesehen bewegt sich daher ein Punkt auf der Flasche im Inspektionsbereich aufgrund der Translationsbewegung des Förderers 12 nach rechts. Dieser Bewegung überlagert sich die Eigendrehbewegung der Flasche um deren Längsachse, die im Inspektionsbereich dieselbe Richtung hat, sich also zu der Förderergeschwindigkeit addiert.

Weiter ist bei dem vorstehend beschriebenen Ausführungsbeispiel zu Erläuterungszwecken eine Zeilenkamera 30 benutzt worden. Ebenso könnte selbstverständlich auch eine Matrixkamera benutzt werden. Das ist lediglich eine Frage der Zeilenabtastfrequenz bzw. Einzelbildfrequenz. Die heute verfügbaren Matrixkameras arbeiten wesentlich langsamer als Zeilenkameras. Wenn eine Matrixkamera mit ausreichend hoher Einzelbildfrequenz verfügbar ist, kann eine solche Kamera ohne weiteres statt der Zeilenkamera benutzt werden. Dabei ist jedoch zu beachten, daß bei ausreichend hoher Einzelbildfrequenz einer Matrixkamera diese auch eine ausreichend große Detektormatrix haben muß, das heißt eine ausreichend große Anzahl von Pixel. Bei einer 64 x 64-Detektor-Matrix und einer an sich ausreichenden Einzelbildfrequenz von 2000 Einzelbildern pro Sekunde würde sich nämlich eine zu geringe Auflösung ergeben, wenn mit einer solchen Matrixkamera eine Flasche abzutasten ist, die eine Höhe von 35 oder 40 Zentimetern hat.

Die Spiegelanordnung, wie sie bei dem Ausführungsbeispiel nach den Fig. 1 bis 5 gezeigt ist, kann unverändert eingesetzt werden, wenn statt einer Durchlichtbeleuchtungseinrichtung wie bei der Ausführungsform nach den Fig. 1 bis 5 eine Front- oder Auflichtbeleuchtungseinrichtung nach Fig. 6 benutzt wird. Diese zweite Ausführungsform der Inspektionsvorrichtung nach der Erfindung kann auch benutzt werden, um lichtdurchlässige oder durchsichtige Hohlkörper zu inspizieren, für letztere eignet sich aber besser die zuvor beschriebene Durchlichtbeleuchtungseinrichtung. Die Ausführungsform nach Fig. 6 wird eher zur Inspektion von Flaschen 18 aus undurchsichtigem Kunststoff oder Blech oder von Blechdosen od.dgl. benutzt.

In der Ausführungsform nach Fig. 6 weist die insgesamt mit 116 bezeichnete Beleuchtungseinrichtung eine oberhalb der Spiegel 34a-34d angeordnete Punktlichtquelle 128 auf, die die Flaschen 18 im Inspektionsbereich 20 über eine Zerstreuungslinse 111 und eine nahe vor dieser angeordnete Schlitzblende 112 sowie über eine nahe vor den Flaschen 18 angeordnete weitere Schlitzblende 113 mit einem fächerförmigen Strahl 132 beleuchtet. Zur Halterung der Punktlichtquelle 128, der Zerstreuungslinse 111 und der Schlitzblenden 112, 113 ist üblicherweise ein Gehäuse vorgesehen, das in Fig. 6 der Übersichtlichkeit halber nicht dargestellt worden ist. Die Bilder, die die Spiegel 34a-34d von den Flaschen 18 aufnehmen, werden auf oben mit Bezug auf das erste Ausführungsbeispiel beschriebene Weise weiterverarbeitet. Unterschiedlich ist hier lediglich, daß diese Bilder durch auffallendes Licht erzeugt worden sind, wogegen sie bei der Ausführungsform nach den Fig. 1 bis 5 mittels Durchlicht erzeugt worden sind.

## Patentansprüche

1. Vorrichtung zur dreidimensionalen Inspektion von Hohlkörpern (18)
- mit einem Förderer (12) zur Bewegung der Hohlkörper (18) durch einen Inspektionsbereich (20) auf einer Kreisbahn unter gleichzeitigem Drehen der Hohlkörper (18) um eine Symmetrieachse, die zur Achse (22) der Kreisbahn parallel ist,
- mit einer Beleuchtungseinrichtung (16,116) für die im Inspektionsbereich (20) befindlichen Hohlkörper (18),
- mit einem photoelektrischen Wandler (30) zum Empfang von Licht, das von den im Inspektionsbereich (20) befindlichen Hohlkörpern (18) ausgeht, und
- mit einer Gruppe von festen, ebenen Spiegeln (34a-34d), die im Lichtstrahlengang angeordnet und gegeneinander abgewinkelt sind, **dadurch gekennzeichnet**,
- daß die Beleuchtungseinrichtung (16,116) die Hohlkörper (18) innerhalb des Inspektionsbereiches (20) homogen beleuchtet,
- daß der photoelektrische Wandler Teil einer Matrix- oder Zeilenkamera (30) mit zugeordneten Prozessor und Monitor zur Bildverarbeitung ist, und
- daß n feste, ebene Spiegel (34a-34d) in dem Lichtstrahlengang (32) zwischen dem Inspektionsbereich (20) und der Matrix- oder Zeilenkamera (30) in einer quer zur Achse (22) der Kreisbahn gelegenen horizontalen Reihe versetzt hintereinander und fest angeordnet sind, und bei gegebener Winkelbreite des Inspektionsbereiches (20) eine gegenseitige Abwinkelung (W) von 1/n der Winkelbreite des Inspektionsbereiches haben.

2. Vorrichtung nach Anspruch 1, dadurch gekennzeichnet, daß die Beleuchtungseinrichtung (16) die Hohlkörper (18) innerhalb des Inspektionsbereiches (20) mit Durchlicht beleuchtet.

3. Vorrichtung nach Anspruch 1, dadurch gekennzeichnet, daß die Beleuchtungseinrichtung (116) die Hohlkörper (18) innerhalb des Inspektionsbereiches (20) mit Auflicht beleuchtet.

4. Vorrichtung nach einem der Ansprüche 1 bis 3, dadurch gekennzeichnet, daß die Beleuchtungseinrichtung (116) eine Punktlichtquelle (128) ist, die die Hohlkörper (18) im Inspektionsbereich (20) über eine Zerstreuungslinse (111) und Schlitzblenden (112, 113) mit einem fächerförmigen Strahl (132) beleuchtet.

5. Vorrichtung nach einem der Ansprüche 1 bis 3, dadurch gekennzeichnet, daß die Beleuchtungseinrichtung (16) verteilte Lichtquellen (28) mit einer diffus transparenten Platte (26) enthält.

6. Vorrichtung nach einem der Ansprüche 1 bis 5, dadurch gekennzeichnet, daß das Verhältnis der Hohlkörperdrehgeschwindigkeit zur Förderdrehgeschwindigkeit so gewählt ist, daß jeder Hohlkörper (18) innerhalb des Inspektionsbereiches (20) insgesamt eine vollständige Umdrehung um seine Symmetrieachse und 1/n Umdrehung vor jedem Spiegel (34a-34d) ausführt.

7. Vorrichtung nach einem der Ansprüche 1 bis 6, dadurch gekennzeichnet, daß der gegenseitige Winkelabstand der Hohlkörper (18) auf dem Förderer (12) 2/n der Winkelbreite des Inspektionsbereiches (20) beträgt.

8. Vorrichtung nach einem der Ansprüche 1 bis 7, dadurch gekennzeichnet, daß die Richtungen der Hohlkörperdrehung um die Symmetrieachse und der Bewegung des Förderers so gewählt sind, daß sich die Hohlkörperdrehgeschwindigkeit und die Fördererdrehgeschwindigkeit im Inspektionsbereich (20) addieren.

9. Vorrichtung nach einem der Ansprüche 1 bis 8, dadurch gekennzeichnet, daß die Spiegel (34a-34d) höhenversetzt hintereinander angeordnet und so gegen die Vertikale und untereinander abgewinkelt sind, daß über jeden Spiegel (34a-34d) ein in der Vertikalen gleicher Bereich des Hohlkörpers (18) auf dem photoelektrischen Wandler abgebildet wird und die auf der Kreisbahn hintereinander angeordneten Bereiche mit Hilfe der Spiegel (34a-34d) und des bildverarbeitenden Prozessors auf dem Monitor in einer Reihe abbildbar sind.

10. Vorrichtung nach einem der Ansprüche 1 bis 9, dadurch gekennzeichnet, daß die Winkelstellungen aller Spiegel (34a-34d) justierbar sind.

11. Vorrichtung nach einem der Ansprüche 1 bis 10, dadurch gekennzeichnet, daß in dem Lichtstrahlengang (32) zwischen der Gruppe (34) von Spiegeln (34a-34d) und dem photoelektrischen Wandler ein Umlenkspiegel (36) angeordnet ist.

## Claims

1. An apparatus for the three-dimensional inspection of hollow bodies (18),
- having a conveyor (12) for moving the hollow bodies (18) through an inspection region (20) on a circular path with simultaneous rotation of the hollow bodies (18) about an axis of symmetry which is parallel to the axis (22) of the circular path,
- having an illumination device (16, 116) for the hollow bodies (18) situated in the inspection region (20),
- having a photoelectric converter (30) for receiving light which issues from the hollow bodies (18) situated in the inspection region (20), and
- having a group of fixed planar mirrors (34a-34d), which are disposed in the path of the light beam and at an angle to one another, characterised in that
- the illumination device (16, 116) homogeneously illuminates the hollow bodies (18) within the inspection region (20),
- that the photoelectric converter is part of a matrix or line-scanning camera (30) having an associated processor and monitor for image processing, and
- that n stationary, planar mirrors (34a-34d) are disposed, fixed and offset one behind another in a horizontal row situated transversely to the axis (22) of the circular path, in the path of the light beam (32) between the inspection region (20) and the matrix or line-scanning camera (30), and for a given angular width of the inspection region (20) have a mutual angularity (W) of 1/n of the angular width of the inspection region.

2. An apparatus according to claim 1, characterised in that the illumination device (16) illuminates the hollow bodies (18) within the inspection region (20) with transmitted light.

3. An apparatus according to claim 1, characterised in that the illumination device (116) illuminates the hollow bodies (18) within the inspection region (20) with incident light.

4. An apparatus according to any one of claims 1 to 3, characterised in that the illumination device (116) is a point light source (128) which illuminates the hollow bodies (18) in the inspection region (20) with a fan-shaped beam (132) via a divergent lens (111) and slit diaphragms (112, 113).

5. An apparatus according to any one of claims 1 to 3, characterised in that the illumination device (16) contains distributed light sources (28) with a diffusely transparent plate (26).

6. An apparatus according to any one of claims 1 to 5, characterised in that the ratio of the rotational speed of the hollow bodies to the rotational speed of conveying is selected so that inside the inspection region (20) each hollow body (18) executes a total of one complete revolution about its axis of symmetry and 1/n of a revolution in front of each mirror (34a-34d).

7. An apparatus according to any one of claims 1 to 6, characterised in that the mutual spacing of the hollow bodies (18) on the conveyor (12) is 2/n of the angular width of the inspection region (20).

8. An apparatus according to any one of claims 1 to 7, characterised in that the directions of rotation of the hollow bodies about the axis of symmetry and of the movement of the conveyor are selected so that the rotational speed of the hollow bodies and the rotational speed of conveying are added in the inspection region (20).

9. An apparatus according to any one of claims 1 to 8, characterised in that the mirrors (34a-34d) are arranged offset in height one behind another and are angled with respect to the vertical and to each other so that the same vertical region of the hollow body (18) is imaged on the photoelectric converter by each mirror (34a-34d) and the regions disposed one behind the other on the circular path can be displayed in a row on the monitor with the aid of the mirrors (34a-34d) and the image-processing processor.

10. An apparatus according to any one of claims 1 to 9, characterised in that the angular positions of all the mirrors (34a-34d) are adjustable.

11. An apparatus according to any one of claims 1 to 10, characterised in that a deviation mirror (36) is disposed in the path of light beam (32) between the group (34) of mirrors (34a-34d) and the photoelectric converter.

## Revendications

1. Appareil d'inspection tridimensionnelle de corps creux (18), comprenant :
- un convoyeur (12) pour déplacer les corps creux (18) à travers une région d'inspection (20) suivant un trajet circulaire, avec rotation simultanée des corps creux (18) autour d'un axe de symétrie parallèle à l'axe (22) du trajet circulaire,
- un dispositif d'éclairage (16, 116) pour les corps creux (18) qui se trouvent dans la région d'inspection (20),
- un transducteur photo-électrique (30) pour recevoir la lumière provenant des corps creux (18) qui se trouvent dans la région d'inspection (20), et
- un groupe de miroirs plans fixes (34a à 34d) disposés dans le trajet de la lumière et décalés angulairement les uns par rapport aux autres, caractérisé
- en ce que le dispositif d'éclairage (16, 116) éclaire les corps creux (18) de façon homogène à l'intérieur de la région d'inspection (20),
- en ce que le transducteur photo-électrique fait partie d'une caméra (30) à matrice ou à lignes à laquelle sont associés un processeur et un moniteur de traitement d'image, et
- en ce que n miroirs plans fixes (34a à 34d) sont disposés de façon fixe dans le trajet de la lumière (32), entre la région d'inspection (20) et la caméra (30) à matrices ou à lignes, décalés les uns derrière les autres en une rangée horizontale perpendiculaire à l'axe (22) du trajet circulaire, ces miroirs, pour une ouverture d'angle donnée de la région d'inspection (20), présentant un décalage angulaire mutuel (W) égal à 1/n de l'ouverture d'angle de la région d'inspection.

2. Appareil suivant la revendication 1, caractérisé en ce que le dispositif d'éclairage (16) éclaire les corps creux (18), à l'intérieur de la région d'inspection (20), avec un éclairage par transmission.

3. Appareil suivant la revendication 1, caractérisé en ce que le dispositif d'éclairage (116) éclaire les corps creux (18), à l'intérieur de la région d'inspection (20), avec un éclairage par réflexion.

4. Appareil suivant l'une des revendications 1 à 3, caractérisé en ce que le dispositif d'éclairage (116) est constitué par une source lumineuse ponctuelle (128) qui éclaire les corps creux (18), dans la région d'inspection (20), avec un faisceau (132) en éventail par l'intermédiaire d'une lentille divergente (111) et d'un diaphragme à fente (112, 113).

5. Appareil suivant l'une des revendications 1 à 3, caractérisé en ce que le dispositif d'éclairage (16) comporte des sources lumineuses distinctes (28) et une plaque à transparence diffuse (26).

6. Appareil suivant l'une des revendications 1 à 5, caractérisé en ce que le rapport de la vitesse de rotation des corps creux à celle du convoyeur est choisi de manière que chaque corps creux (18), à l'intérieur de la région d'inspection (20), effectue dans l'ensemble une révolution complète autour de son axe de symétrie et 1/n de cette révolution devant chaque miroir (34a à 34d)

7. Appareil suivant l'une des revendications 1 à 6, caractérisé en ce que l'écart angulaire mutuel des corps creux (18) sur le convoyeur (12) représente 2/n de l'ouverture angulaire de la région d'inspection (20).

8. Appareil suivant l'une des revendications 1 à 7, caractérisé en ce que les sens de rotation des corps creux autour de leur axe de symétrie et du mouvement du convoyeur sont choisis de manière que, dans la région d'inspection (20), les vitesses de rotation des corps creux et du convoyeur s additionnent.

9. Appareil suivant l'une des revendications 1 à 8, caractérisé en ce que les miroirs (34a à 34d) sont décalés en hauteur les uns derrière les autres et sont inclinés par rapport a la verticale et les uns par rapport aux autres, de façon qu'une même région, dans le sens vertical, d'un corps creux (18) soit représentée sur le transducteur photo-électrique par l'intermédiaire de chaque miroir (34a à 34d) et que, au moyen des miroirs (34a à 34d) et du processeur de traitement d'image, les régions situées les unes derrière les autres sur le trajet circulaire soient représentées sur le moniteur en une rangée.

10. Appareil suivant l'une des revendications 1 à 9, caractérisé en ce que les positions angulaires de tous les miroirs (34a à 34d) sont réglables.

11. Appareil suivant l'une des revendications 1 à 10, caractérisé en ce qu'un miroir de renvoi (36) est disposé dans le trajet de la lumière (32) entre le groupe (34) de miroirs (34a à 34d) et le transducteur photo-électrique.
